# EUROPÄISCHE PATENTANMELDUNG

(11) **EP 1 898 566 A1**
(43) Veröffentlichungstag der Anmeldung: **12.03.2008**
(21) Anmeldenummer: 07112699.9
(22) Anmeldetag: 18.07.2007
(51) Int. Cl.: H04L 12/403

(54) **Verfahren und Vorrichtung zur Übertragung digitaler Daten**

(30) Priorität: 08.09.2006 DE 102006042317
(71) Anmelder: ROBERT BOSCH GMBH, 70442 Stuttgart (DE)
(72) Erfinder: Resch, Carsten, 31141, Hildesheim (DE); Hanisch, Juergen, 72658, Bempflingen (DE); Pfitzer, Otto, 72820, Sonnenbuehl (DE); Scheurer, Uwe, 72762, Reutlingen (DE)

(57) **Zusammenfassung**

Ein Verfahren zur Übertragung digitaler Daten zwischen einer Mehrzahl von Modulen (2, 3, 4, 5, 6), denen jeweils mindestens eine Adresse (10, 12) zugeordnet ist, über eine Zentraleinheit (7) mit Zwischenspeicher (8), lässt sich dadurch verbessern, dass der Zwischenspeicher (8) für jedes Modul (2, 3, 4, 5, 6) einen über die dem Modul (2, 3, 4, 5, 6) zugeordnete Adresse (10, 12) adressierbaren Datenspeicherbereich (9, 11) und eine Zustandskennung des Datenspeicherbereichs (9, 11) zur Information darüber, ob der Datenspeicherbereich (9, 11) mit neuen Daten beschreibbar ist oder gültige Daten zum Auslesen enthält, wobei ein sendendes Modul (2, 3, 4, 5, 6) Daten in Datenspeicherbereiche (9, 11) in Abhängigkeit der Zustandskennung schreibt und ein anderes empfangenes Modul (2, 3, 4, 5, 6) die Daten in Abhängigkeit von der Zustandskennung aus dem Datenspeicherbereich (9, 11) ausliest. Ferner wird eine Übertragungseinrichtung zum Durchführen des Verfahrens vorgestellt.

## Beschreibung

Die Erfindung betrifft ein Verfahren zur Übertragung digitaler Daten zwischen einer Mehrzahl von Modulen, denen jeweils mindestens eine Adresse zugeordnet ist, über eine Zentraleinheit.

Ferner betrifft die Erfindung eine Übertragungseinrichtung mit einer Mehrzahl von Modulen, denen jeweils mindestens eine Adresse zugeordnet ist, und mit einer Zentraleinheit mit Zwischenspeicher.

Netzwerke, beispielsweise Computernetzwerke, bestehen aus einer Mehrzahl zum Austausch von Daten miteinander verbundener Computer, die so genannten Teilnehmer. Die Teilnehmer können auf vielfältige Weise miteinander verbunden werden. Die konkrete Struktur eines Netzwerkes, das heißt welcher Teilnehmer mit welchem oder welchen anderen Teilnehmern verbunden ist, wird Topologie des Netzwerkes genannt. Bekannte Topologien sind beispielsweise die Ringtopologie, bei der die Teilnehmer jeweils mit zwei benachbarten Teilnehmern in einem geschlossenen Ring angeordnet sind. Ein anderes Beispiel ist die so genannte Sterntopologie, bei der es einen zentralen Teilnehmer gibt, an dem alle anderen Teilnehmer mit einer Zweipunktverbindung angeschlossen sind. Die anderen Teilnehmer untereinander sind nicht miteinander verbunden.

In einem Netzwerk ist es erforderlich, dass zwischen den Teilnehmern Informationen in Form von Daten, insbesondere digitalen Daten, ausgetauscht werden können. Sollten Daten von einem Teilnehmer an einen anderen Teilnehmer innerhalb des Netzwerkes übermittelt werden, muss ein Weg von dem sendenden Teilnehmer bis zum empfangenen Teilnehmer festgelegt werden. Dieser Vorgang wird Routing genannt.

Das Routing kann in Netzwerken mit oder ohne Softwareunterstützung erfolgen.

Beim Routing mit Softwareunterstützung entscheidet ein geeignetes Computerprogramm, welcher Teilnehmer des Netzwerkes als nächstes für den Transport der Daten zuständig ist. Darüber hinaus kann die Software auch die Weiterleitung der Daten zu dem nächsten Teilnehmer steuern. Diese Weiterleitung kann aktiv oder passiv erfolgen. Bei der aktiven Weiterleitung durch das Computerprogramm werden die Daten von dem einen Teilnehmer in den Speicher des anderen Teilnehmers hineinkopiert. Beim passiven Weiterleiten werden die Daten von einem Teilnehmer in einen Zwischenspeicher kopiert, von dem der nächste Teilnehmer die Daten abholt. Bei dieser Form des Routing muss das Computerprogramm ständig in das Netzwerk bzw. die Kette des Datentransports eingreifen.

Beim Routing ohne Softwareunterstützung werden die Teilnehmer physikalisch in jeder möglichen Kombination miteinander verbunden. Die Übertragung der Daten erfolgt über eine aktive Verbindung. Welche Verbindung im Einzelfall aktiv ist, muss in geeigneter Weise konfiguriert werden. Bei dieser Form des Routing ist nachteilig, dass die Anzahl physikalischer Verbindungen mit der Anzahl der angeschlossenen Teilnehmer überproportional steigt und damit auch die Fläche für die Leitungen. Mit zunehmender Fläche steigen auch die Herstellungskosten, insbesondere wenn die Verbindungen in einem Halbleiterchip realisiert werden. Zudem werden die Leitungen mit zunehmender Teilnehmerzahl immer länger, was zu Laufzeitproblemen und damit zu einer Beschränkung der Teilnehmerzahl führt.

Daher ist es Aufgabe der vorliegenden Erfindung, ein verbessertes Verfahren zur Übertragung digitaler Daten zwischen einer Mehrzahl von Modulen bereitzustellen. Ferner ist es Aufgabe der vorliegenden Erfindung, eine Übertragungseinrichtung zur Durchführung des Verfahrens bereitzustellen.

Die Aufgabe wird gelöst durch ein Verfahren der eingangs genannten Art, das dadurch gekennzeichnet ist, dass der Zwischenspeicher für jedes Modul einen über die dem Modul zugeordnete Adresse adressierbaren Datenspeicherbereich und eine Zustandskennung des Datenspeicherbereichs zur Information darüber, ob der Datenspeicherbereich mit neuen Daten beschreibbar ist oder gültige Daten zum Auslesen enthält, wobei ein sendendes Modul Daten in Datenspeicherbereiche in Abhängigkeit der Zustandskennung schreibt und ein anderes empfangenes Modul die Daten in Abhängigkeit von der Zustandskennung aus dem Datenspeicherbereich ausliest.

Bei den Modulen kann es sich um die oben erwähnten Teilnehmer eines Computernetzwerkes handeln. Der Begriff Modul ist aber allgemeiner zu verstehen. Unter einem Modul ist jede Hardwareschaltungen zu verstehen, die Daten verändert. Beispielsweise sind Module denkbar, die die Abtastrate, Anzahl der Kanäle oder die Auflösung der zu übertragenden digitalen Daten verändern.

Das erfindungsgemäße Verfahren bietet gegenüber den bekannten Routing-Verfahren mit Softwareunterstützung den Vorteil, dass die Software in dem System, das die Module umfasst, von den Aufgaben des Routing entlastet wird.

Gegenüber den Routing-Verfahren ohne Softwareunterstützung bietet das erfindungsgemäße Verfahren den Vorteil, dass lange Signallaufzeiten der Daten zwischen den einzelnen Modulen auch bei zunehmender Anzahl an Modulen niedrig gehalten werden, sodass eine größere Anzahl an Modulen in dem Netzwerk enthalten sein können.

Das erfindungsgemäße Verfahren ist auch geeignet, Daten über mehrere logische Kanäle zu übertragen. Hierzu müssen jedem Modul so viele über Adressen adressierbare Datenspeicherbereiche zugeordnet sein, wie logische Kanäle übertragen werden sollen.

In einer Ausführungsform legt das sendende Modul die Daten in den ihm zugeordneten Datenspeicherbereich, und das empfangene Modul liest die Daten aus dem Datenspeicherbereich des sendenden Moduls aus. Hierzu wird dem empfangenen Modul die Adresse des Datenspeicherbereichs des sendenden Moduls übermittelt. Diese Ausführungsform benutzen sämtliche Module die ihnen zugeordneten Datenspeicherbereiche zum Speichern der von ihnen zu sendenden Daten.

In einer alternativen Ausführungsform legt das sendende Modul Daten in den einem empfangenen Modul zugeordneten Datenspeicherbereich ab, und das empfangene Modul liest die Daten aus dem ihm zugeordneten Datenspeicherbereich aus. Hierzu wird dem sendenden Modul die Adresse des Datenspeicherbereichs des empfangenen Moduls übermittelt. Bei dieser Ausführungsform benutzen sämtliche Module die ihnen zugeordneten Datenspeicherbereiche zum Auslesen der Daten.

Zweckmäßig wird das Ablegen und Auslesen der Daten aus bzw. in den Datenspeicherbereich durch die Zentraleinheit gesteuert. Hierzu übermittelt die Zentraleinheit den Modulen diejenigen Adressen, in deren zugeordneten Datenspeicherbereiche die zu übertragenen Daten abgelegt oder aus denen diese Daten gelesen werden sollen. Ferner übermittelt die Zentraleinheit die Zustandskennungen, um dem empfangenen Modul mitzuteilen, dass gültige Daten bereitstehen. Dem sendenden Modul dient die Zustandskennung als Information darüber, ob die Daten in dem zu beschreibenden Datenspeicherbereich bereits gelesen worden sind und überschrieben werden können. Es ist aber auch möglich, dass das Schalten der Wege zwischen den einzelnen Modulen über eine übergeordnete Software erfolgt.

Über eine zentrale Steuerung durch die Zentraleinheit lassen sich synchrone Daten übertragen, ohne dass es erforderlich ist, Taktinformationen zu übertragen. Dies lässt sich realisieren, indem der Datenaustausch zwischen der Zentraleinheit und dem sendenden bzw. empfangenen Modul an den Takt der Zentraleinheit gekoppelt wird.

Zweckmäßig wird das Ablegen und Auslesen der Daten aus bzw. in den Datenspeicherbereich durch die Zustandskennung ausgelöst, um keine zeitlichen Verzögerungen bei der Übertragung der Daten entstehen zu lassen. Die Daten werden auf diese Weise immer zum frühsten Zeitpunkt weitergeleitet.

In einer weiteren Ausführungsform werden die Daten, Adressen und/oder Zustandskennungen über Hardware-Schnittstellen zwischen den Modulen und der Zentraleinheit ausgetauscht. Hardware-Schnittstellen haben den Vorteil, dass sie die Daten sehr schnell übertragen können und keine zusätzliche Software erforderlich ist.

In einer vorteilhaften Ausführungsform sind die Module, die Schnittstellen und die Zentraleinheit in einem Halbleiterchip integriert. Hierdurch können auf kleinem Raum viele Module miteinander verknüpft werden.

Die Aufgabe wird ferner durch eine gattungsgemäße Übertragungseinrichtung gelöst, die eingerichtet ist, digitale Daten nach einem der Verfahren der Ansprüche 1 bis 6 zu übertragen, indem der Zwischenspeicher für jedes Modul einen über die dem Modul zugeordnete Adresse adressierbaren Datenspeicherbereich und eine Zustandskennung des Datenspeicherbereichs zur Information darüber, ob der Datenspeicherbereich mit neuen Daten beschreibbar ist oder gültige Daten zum Auslesen enthält, wobei Daten durch ein sendendes Modul in Datenspeicherbereiche in Abhängigkeit der Zustandskennung schreibbar und die Daten durch ein anderes empfangenes Modul in Abhängigkeit von der Zustandskennung aus dem Datenspeicherbereich auslesbar sind.

In einer Ausführungsform ist die Übertragungseinrichtung in Hardware implementiert. Hierdurch kann eine schnelle Datenübertragung und ein schnelles Aktivieren von Übertragungswegen erzielt werden.

Die Erfindung wird in der nachfolgenden Zeichnung anhand eines Ausführungsbeispiels näher beschrieben. Es zeigt:

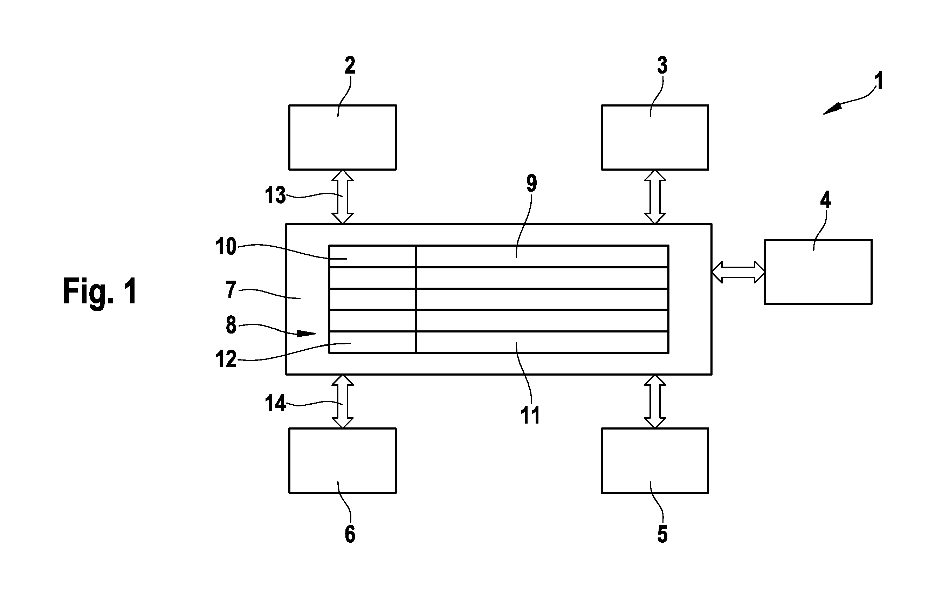

Figur 1 - eine Übertragungseinrichtung, die eingerichtet ist, digitale Daten nach dem erfindungsgemäßen Verfahren zu übertragen.

In Figur 1 ist eine Übertragungseinrichtung 1 dargestellt. Die Übertragungseinrichtung 1 weist fünf Module 2, 3, 4, 5, 6 auf. Bei den Modulen 2, 3, 4, 5, 6 handelt es sich Hardwareschaltungen, die einen Datenstrom von Audiodaten verändern können. Beispielsweise kann die Abtastrate eine Audiosignals, die Anzahl der zu übertragenen Kanäle oder die Auflösung verändert werden.

Die Übertragungseinrichtung 1 umfasst ferner eine Zentraleinheit 7 mit einem Speicherbereich 8, der als RAM (random access memory) ausgebildet ist.

In dem Zwischenspeicher 8 ist jedem Modul 2, 3, 4, 5, 6 ein Datenspeicherbereich 9 zugeordnet, der über eine Adresse 10 adressierbar ist. In dem Ausführungsbeispiel sind der Datenspeicherbereich 9 und die zugeordnete Adresse 10 dem Modul 2 zugeordnet. Der Datenspeicherbereich 11 mit der zugeordneten Adresse 12 ist dem Modul 6 zugeordnet.

Die Zentraleinheit 7 umfasst weiter für den adressierbaren Datenspeicherbereich 9, 11 eine Zustandskennung zur Information darüber, ob der Datenspeicherbereich 9, 11 mit neuen Daten beschreibbar ist oder gültige Daten zum Auslesen enthält.

Die Module 2, 3, 4, 5, 6 sind über geeignete Schnittstellen 13, 14 mit der Zentraleinheit 7 verbunden. Über die Schnittstellen 13, 14 können Adressen 10, 12, die Datenspeicherbereichen 9, 11 zugeordnet sind, zwischen der Zentraleinheit 7 und den Modulen 2, 3, 4, 5, 6 ausgetauscht werden.

Jedes Modul 2, 3, 4, 5, 6 kennt den ihm zugeordneten Datenspeicherbereich 9, 11, der über die Adresse 10, 12 adressiert werden kann. Die Adresse 10 des zugeordneten Speicherbereichs 9 ist in diesem Ausführungsbeispiel in dem Modul 2 in Hardware implementiert. Selbstverständlich könnte die Adresse 10 des zugeordneten Speicherbereichs 9 dem Modul 2 auch über die Zentraleinheit 1 mitgeteilt werden.

Sollen beispielsweise Daten von dem Modul 2 an das Modul 6 übertragen werden, sind zwei Ausführungsformen des erfindungsgemäßen Verfahrens möglich.

Die erste Alternative besteht darin, dass jedes Modul 2, 3, 4, 5, 6 Daten in den jeweils zugeordneten Datenspeicherbereich 9, 11 schreiben kann. Ein Lesezugriff ist nicht gestattet. Beispielsweise kann das Modul 2 Daten ausschließlich in den Datenspeicherbereich 9 schreiben.

Den Modulen 2, 3, 4, 5, 6 ist es dagegen gestattet, aus den Datenspeicherbereichen 9, 11 der anderen Module 2, 3, 4, 5, 6 zu lesen. Beispielsweise kann das Modul 6 aus dem Datenspeicherbereich 9, der dem Modul 2 zugeordnet ist, lesen.

Zur Übertragung der Daten von dem Modul 2, das sendende Modul, auf das Modul 6, das empfangene Modul, schreibt das Modul 2 die zu übertragenen Daten in dem ihm zugeordneten Datenspeicherbereich 9. Die Zentraleinheit 7 setzt die Zustandskennung für den Datenspeicherbereich 9 auf den Status, dass gültige Daten zum Auslesen vorhanden sind. Die Zentraleinheit 1 übermittelt die Adresse 10 des beschriebenen Datenspeicherbereichs 9 an das empfangene Modul, hier das Modul 6. Zwischen welchen Modulen 2, 3, 4, 5, 6 im Einzelfall Daten ausgetauscht werden sollen, wird von der Zentraleinheit, gegebenenfalls durch eine Eingabe eines Benutzers von außen über eine entsprechende Eingabeeinrichtung (nicht dargestellt), gesteuert.

Das Modul 6 erkennt anhand der Zustandskennung, dass gültige Daten in dem Datenspeicherbereich 9 bereitstehen. Wo sich die Daten in dem Zwischenspeicher 8 der Zentraleinheit 7 befinden, wird dem Modul 6 über die Adresse 10 mitgeteilt. Das Modul 6 liest die Daten aus dem Datenspeicherbereich 9 aus.

Die zweite Alternative zur Übertragung von Daten von dem Modul 2 an das Modul 6 besteht darin, dass die Module 2, 3, 4, 5, 6 aus den ihnen zugeordneten Datenspeicherberichen 9, 11 Daten nur lesen dürfen. Ein Schreiben in die zugeordneten Datenspeicherbereichen 9, 11 ist nicht gestattet.

Es ist den Modulen 2, 3 ,4, 5, 6 jedoch gestattet, in die Datenspeicherbereiche 9, 11 der anderen Module 2, 3, 4, 5, 6 zu schreiben.

Zur Übertragung der Daten von dem Modul 2 auf das Modul 6 wird dem Modul 2 von der Zentraleinheit 7 die Adresse 12 des Datenspeicherbereichs 11 des Moduls 6 mitgeteilt. Daraufhin schreibt das Modul 2 die zu übertragenen Daten in den Datenspeicherbereich 11 des Moduls 6. Daraufhin übermittelt die Zentraleinheit 7 dem Modul 6 die Zustandskennung für den Datenspeicherbereich 11. Vorliegend wird dem Modul 6 der Status übermittelt, dass gültige Daten zum Auslesen aus dem Datenspeicherbereich 11 bereitstehen. Über die Schnittstelle 14 liest das Modul 6 die Daten aus dem Datenspeicherbereich 11 aus.

Anschließend wird die Zustandskennung für den Datenspeicherbereich 11 auf den Status gesetzt, dass der Datenspeicherbereich 11 mit neuen Daten beschreibbar ist. Durch die Zustandskennung ist es nicht nötig, den Datenspeicherbereich 9, 11 nach jedem Auslesen zu löschen. Die Daten, die nicht mehr aktuell sind, können einfach überschrieben werden.

Mit dem erfindungsgemäßen Verfahren können auch synchrone Daten, also solche, die ein festes Zeitraster einhalten müssen, ausgetauscht werden. Die Synchronisation erfolgt nicht über den Austausch von Taktinformationen zwischen den Modulen 2, 3, 4, 5, 6, sondern ausschließlich über den gemeinsamen Takt der Zentraleinheit 7.

Mit dem erfindungsgemäßen Verfahren können auch mehrere synchrone Datenströme ausgetauscht werden, die miteinander asynchron sind, ohne dass die Hardware geändert werden müsste. Beispielsweise könnten ein Audiodatenstrom mit einer Zeitbasis von 16 kHz und ein Audiodatenstrom mit einer Zeitbasis von 40 kHz geroutet werden, ohne die Hardware zu ändern.

## Patentansprüche

1. Verfahren zur Übertragung digitaler Daten zwischen einer Mehrzahl von Modulen (2, 3, 4, 5, 6), denen jeweils mindestens eine Adresse (10, 12) zugeordnet ist, über eine Zentraleinheit (7) mit Zwischenspeicher (8), **dadurch gekennzeichnet, dass** der Zwischenspeicher (8) für jedes Modul (2, 3, 4, 5, 6) einen über die dem Modul (2, 3, 4, 5, 6) zugeordnete Adresse (10, 12) adressierbaren Datenspeicherbereich (9, 11) und eine Zustandskennung des Datenspeicherbereichs (9, 11) zur Information darüber, ob der Datenspeicherbereich (9, 11) mit neuen Daten beschreibbar ist oder gültige Daten zum Auslesen enthält, wobei ein sendendes Modul (2, 3, 4, 5, 6) Daten in Datenspeicherbereiche (9, 11) in Abhängigkeit der Zustandskennung schreibt und ein anderes empfangenes Modul (2, 3, 4, 5, 6) die Daten in Abhängigkeit von der Zustandskennung aus dem Datenspeicherbereich (9, 11) ausliest.

2. Verfahren nach Anspruch 1, **dadurch gekennzeichnet, dass** das sendende Modul (2, 3, 4, 5, 6) die Daten in den ihm zugeordneten Datenspeicherbereich (9, 11) ablegt und das empfangene Modul (2, 3, 4, 5, 6) die Daten aus dem Datenspeicherbereich (9, 11) des sendenden Moduls (2, 3, 4, 5, 6) ausliest.

3. Verfahren nach Anspruch 1, **dadurch gekennzeichnet, dass** das sendende Modul (2, 3, 4, 5, 6) Daten in den einem empfangenen Modul (2, 3, 4, 5, 6) zugeordneten Datenspeicherbereich (9, 11) ablegt und das empfangene Modul (2, 3, 4, 5, 6) die Daten aus dem ihm zugeordneten Datenspeicherbereich (9, 11) ausliest.

4. Verfahren nach einem der vorstehenden Ansprüche, **dadurch gekennzeichnet, dass** das Ablegen und Auslesen der Daten aus bzw. in den Datenspeicherbereich (9, 11) durch die Zentraleinheit (7) gesteuert wird.

5. Verfahren nach einem der vorstehenden Ansprüche, **dadurch gekennzeichnet, dass** das Ablegen und Auslesen der Daten aus bzw. in den Datenspeicherbereich (9, 11) durch die Zustandskennung ausgelöst wird.

6. Verfahren nach einem der vorstehenden Ansprüche, **dadurch gekennzeichnet, dass** die Daten, Adressen (10, 12) und/oder Zustandskennungen über Hardware-Schnittstellen (13, 14) zwischen den Modulen (2, 3, 4, 5, 6) und der Zentraleinheit (7) ausgetauscht werden.

7. Übertragungseinrichtung, die eingerichtet ist, digitale Daten nach einem der Verfahren der Ansprüche 1 bis 6 zu übertragen, mit einer Mehrzahl von Modulen (2, 3, 4, 5, 6), denen jeweils mindestens eine Adresse (10, 12) zugeordnet ist, und mit einer Zentraleinheit (7) mit Zwischenspeicher (8), **dadurch gekennzeichnet, dass** der Zwischenspeicher (8) für jedes Modul (2, 3, 4, 5, 6) einen über die dem Modul (2, 3, 4, 5, 6) zugeordnete Adresse (10, 12) adressierbaren Datenspeicherbereich (9, 11) und eine Zustandskennung des Datenspeicherbereichs (9, 11) zur Information darüber, ob der Datenspeicherbereich (9, 11) mit neuen Daten beschreibbar ist oder gültige Daten zum Auslesen enthält, wobei Daten durch ein sendendes Modul (2, 3, 4, 5, 6) in Datenspeicherbereiche (9, 11) in Abhängigkeit der Zustandskennung schreibbar und die Daten durch ein anderes empfangenes Modul (2, 3, 4, 5, 6) in Abhängigkeit von der Zustandskennung aus dem Datenspeicherbereich (9, 11) auslesbar sind.

8. Übertragungseinrichtung nach Anspruch 7, **dadurch gekennzeichnet, dass** die Module (2, 3, 4, 5, 6) mit der Zentraleinheit (7) über Hardware-Schnittstellen (13, 14) verbunden sind.

9. Übertragungseinrichtung nach Anspruch 7 oder 8, **dadurch gekennzeichnet, dass** die Übertragungseinrichtung (1) in Hardware implementiert ist.

10. Übertragungseinrichtung nach einem der Ansprüche 7 bis 9, **dadurch gekennzeichnet, dass** das Auslesen und/oder Schreiben der Daten in den Datenspeicherbereich (9, 11) durch die Zentraleinheit (7) oder die Zustandskennung auslösbar ist.
